# EUROPÄISCHE PATENTANMELDUNG

(11) **EP 2 316 563 A1**
(43) Veröffentlichungstag der Anmeldung: **04.05.2011**
(21) Anmeldenummer: 09174345.0
(22) Anmeldetag: 28.10.2009
(51) Int. Cl.: B01F 11/00, G01N 1/38, G01N 35/02

(54) **Verfahren zum Nachweis von Analyten in einer Probenflüssigkeit sowie Vorrichtung zu dessen Durchführung**

(71) Anmelder: Roche Diagnostics GmbH, 68305 Mannheim (DE); F. Hoffmann-La Roche AG, 4070 Basel (CH)
(72) Erfinder: Die Erfindernennung liegt noch nicht vor
(74) Vertreter: Tiesmeyer, Johannes

(57) **Zusammenfassung**

Die vorliegende Erfindung betrifft ein Verfahren zum Nachweis von Analyten in einer Probenflüssigkeit, bei dem die Probenflüssigkeit einer Mischbehandlung auf einer insbesondere immobilisierte Reaktanden aufweisenden Fläche (38) eines Trägers unterzogen wird, wobei als Gefäß (12) für die Probenflüssigkeit ein insbesondere wannenartiges Gefäß (12) mit im Wesentlichen ebenem Boden (38) als Trägerfläche für die immobilisierten Reaktanden verwendet wird. Erfindungsgemäß wird vorgeschlagen, dass die Probenflüssigkeit bei der Mischbehandlung relativ zu den immobilisierten Reaktanden durch oszillierendes Bewegen des Gefäßes (12) bewegt wird. Ferner betrifft die Erfindung eine Vorrichtung zur Durchführung des erfindungsgemäßen Verfahrens.

## Beschreibung

Die vorliegende Erfindung betrifft ein Verfahren zum Nachweis von Analyten in einer Probenflüssigkeit sowie eine Vorrichtung zu dessen Durchführung.

Bei dem Verfahren wird die Probenflüssigkeit einer Mischbehandlung auf einer insbesondere immobilisierte Reaktanden aufweisenden Fläche eines Trägers unterzogen, wobei als Gefäß für die Probenflüssigkeit ein insbesondere wannenartiges Gefäß mit im Wesentlichen ebenem Boden als Trägerfläche für die immobilisierten Reaktanden verwendet wird. Derartige Träger werden auch als Biochips bezeichnet.

Ein solches Verfahren ist beispielsweise aus der EP 1 604 734 A2 bekannt. Das dort beschriebene Verfahren nutzt zur Verbesserung der Bindung zwischen Analyten und Reaktanden eine zur Probenflüssigkeit bzw. Träger gerichtete Düse mit einem die Trägerfläche überstreichenden Gasstrahl, wobei durch den auf die Probenflüssigkeit auftreffenden Gasstrahl eine verbesserte Durchmischung erreicht wird, was zur verbesserten und beschleunigten Bindung zwischen Analyten und Reaktanden führt.

Auch wenn das bekannte Verfahren in der Praxis gute Resultate erzeugt, ist das Verfahren recht aufwändig und insbesondere die zugehörige Vorrichtung ist relativ komplex. Durch den Luftstrom verdunstet Probenflüssigkeit und jedem Träger muss eine entsprechende Düse zugeordnet sein. Ferner besteht bei derartigen Gaszuführungen von außen das Problem von Kontamination, was aufwändige Reinigungs- und Filterprozesse erforderlich macht, um gewährleisten zu können, dass die Probenflüssigkeit nicht mit verunreinigtem Gas in Berührung kommt.

Weitere im Stand der Technik beschriebene Verfahren, beispielsweise aus der US 5,009,998 oder US 6,063,564, eignen sich nicht für Träger bzw. Biochips mit flächigem Analytreservoir, dessen ebener Boden mit immobilisierten Reaktanden versehen ist, wenn nach der Inkubation noch weitere Prozessschritte von oben her ablaufen sollen, wie z. B. Waschen, Reagenzzugabe, optisches Vermessen etc. Die Analyte in der Grenzschicht zwischen immobilisierten Reaktanden und Probenflüssigkeitsvolumen verarmen durch Bindung an die Reaktanden. Neue Analyte werden nicht rasch genug aus dem Flüssigkeitsvolumen nachgeliefert, bedingt durch die geringe Analytdiffusionsgeschwindigkeit von ca. 1µm/s. Die durch die Anmelderin durchgeführten Untersuchungen zu den bekannten Verfahren haben aufgezeigt, dass der wesentliche Nachteil aller bekannten Verfahren mit Ausnahme des in der EP 1 604 734 A2 offenbarten Verfahrens die schlechte Homogenität der Intensitätssteigerung über die Bodenfläche des Trägers bzw. Biochips ist.

Aufgabe der Erfindung ist es, ein Verfahren und eine Vorrichtung bereitzustellen, die die obigen Nachteile vermeidet und sowohl das Nachweisverfahren als auch die Vorrichtung vereinfacht.

Diese Aufgabe wird im Hinblick auf das Verfahren zum Nachweis von Analyten dadurch gelöst, dass die Probenflüssigkeit bei der Mischbehandlung relativ zu den immobilisierten Reaktanden durch oszillierendes Bewegen des Gefäßes bewegt wird.

Durch eine oszillierende Bewegung des Gefäßes wird die Probenflüssigkeit aufgrund ihrer Trägheit relativ zum Gefäß und auch zu den mit dem Gefäß verbundenen Reaktanden bewegt, so dass in der Grenzschicht zwischen Probenflüssigkeit mit Analyten und Reaktanden eine verbesserte Anreicherung mit Analyten erfolgt. Ferner kann durch die oszillierende Bewegung auch eine verbesserte homogene Verteilung von Analyten relativ zu den Reaktanden erzeugt werden, so dass der Nachweis von Analyten in der Probenflüssigkeit verbessert werden kann. Insgesamt kann die Reaktionskinetik beschleunigt werden. Ferner wurde festgestellt, dass die Verdunstungsrate von Probenflüssigkeit deutlich geringer ist als beim bekannten Verfahren der EP 1604734 A2: mit oszillierenden Probengefäßen lag sie bei etwa 0,3 µl/min verglichen mit etwa 0,6 - 0,7 µl/min gemäß dem bekannten Luftdüsenverfahren, bei Umgebungstemperatur von 18°C und einer relativen Luftfeuchtigkeit von 50 %.

Die oszillierende Bewegung des Gefäßes erfolgt vorzugsweise im Wesentlichen parallel zum ebenen Boden des Gefäßes, wobei vorgeschlagen wird, dass das Gefäß mit einer Frequenz von etwa 1 bis 50 Hertz, vorzugsweise etwa 10 bis 20 Hertz, und einer Amplitude von weniger als 6 Millimeter, vorzugsweise von etwa 0,2 bis 4 Millimeter, höchst vorzugsweise von etwa 1 bis 2 Millimeter, oszilliert wird. Durch die oszillierende Bewegung im Wesentlichen parallel zum ebenen Boden des Gefäßes kann verhindert werden, dass Probenflüssigkeit mit einem das Gefäß abdeckenden Deckel in Berührung kommt, an dem ein Teil der Probenflüssigkeit haften bleiben könnte. Ferner führen die angesprochene Frequenz und Amplitude der oszillierenden Bewegung nicht zu Strömungen in der Probenflüssigkeit, welche zu einer Art Überschwappen der Probenflüssigkeit führen, durch welches obere Randbereiche bzw. Übergangsbereiche zwischen Gefäß und Deckel benetzt werden.

Es wird vorgeschlagen, dass das Gefäß in einer Gefäßhalterung oszilliert wird oder dass mehrere Gefäße gleichzeitig in einer gemeinsamen Gefäßhalterung oszilliert werden. Dabei kann jedes Gefäß durch einen dem jeweiligen Gefäß zugeordneten Antrieb oszilliert werden oder es können mehrere, insbesondere alle Gefäße in der Gefäßhalterung durch einen gemeinsamen Antrieb oszilliert werden. Das Oszillieren von mehreren Gefäßen durch Antreiben einer für die Gefäße gemeinsamen Gefäßhalterung ermöglicht eine gleichmäßige und identische Bewegung aller Gefäße, so dass in allen Gefäßen im Wesentlichen identische Reaktionsbedingungen herrschen.

Damit während der oszillierenden Bewegung keine oder nur wenig Probenflüssigkeit aus dem Gefäß auf Grund von Verdunstung entweicht, wird vorgeschlagen, dass das Gefäß vor dem Oszillieren abgedeckt wird, insbesondere durch ein Deckelelement abgedichtet wird.

Die Vorrichtung zur Durchführung des Verfahrens umfasst wenigstens eine Gefäßhalterung zur Aufnahme von wenigstens einem Gefäß für Probenflüssigkeit und es ist erfindungsgemäß vorgesehen, dass die Vorrichtung wenigstens einen Antrieb aufweist, welcher derart ausgestaltet ist, dass die Gefäßhalterung und das darin enthaltene Gefäß in oszillierende Bewegung versetzt werden kann.

Bevorzugt umfasst die Vorrichtung eine einzige Gefäßhalterung mit mehreren Gefäßaufnahmen und einen einzigen Antrieb, durch den alle in den Gefäßaufnahmen aufgenommenen Gefäße gleichzeitig oszilliert werden können. Ein derartiges Antriebskonzept zur gleichzeitigen oszillierenden Bewegung aller Gefäße stellt eine Vereinfachung der Vorrichtungskonstruktion dar. Ferner ist bei einer derartigen Vorrichtung nur ein Antrieb erforderlich, was sich vorteilhaft auf die Kosten auswirkt.

Alternativ ist es auch denkbar, dass jedem Probengefäß ein eigener Antrieb zugeordnet ist, beispielsweise ein Piezoelement oder dergleichen.

Es wird ferner vorgeschlagen, dass die Vorrichtung ein Gefäßlademittel umfasst, wobei das Gefäßlademittel und die Gefäßhalterung relativ zueinander beweglich sind, um ein Gefäß in eine bestimmte Gefäßaufnahme einsetzen bzw. herausnehmen zu können.

Vorzugsweise ist der Antrieb der Gefäßhalterung derart ausgestaltet, dass er neben der Funktion der Erzeugung der oszillierenden Bewegung wenigstens eine weitere Funktion des Bewegens der Gefäßhalterung relativ zum feststehenden Gefäßlademittel umfasst, derart, dass eine jeweilige Gefäßaufnahme in einer vorbestimmten Relativstellung zum Gefäßlademittel positionierbar ist, um ein Gefäß in die betreffende Gefäßaufnahme einzusetzen oder aus dieser herauszunehmen. Vorzugsweise ist die Gefäßhalterung kreisförmig ausgebildet und weist entlang ihrem Umfangsrand in regelmäßigen Abständen die Gefäßaufnahmen auf. Bei einer derartigen kreisförmigen Gefäßhalterung können Gefäßaufnahmen durch die Gefäßlademittel mit Gefäßen bestückt werden bzw. es können die Gefäße aus diesen Gefäßaufnahmen entfernt werden. Beispielsweise kann eine Gefäßhalterung 12 Gefäßaufnahmen aufweisen. Zum Bestücken der Gefäßhalterung mit Probenflüssigkeit enthaltenden Gefäßen wird die Gefäßhalterung durch den Antrieb mit jeder Gefäßaufnahme zum Gefäßlademittel ausgerichtet, so dass durch das Gefäßlademittel ein Gefäß in die jeweilige Gefäßaufnahme eingesetzt werden kann. Sobald ein erstes Gefäß bzw. ein erster Träger in einer Gefäßaufnahme der Gefäßhalterung aufgenommen ist, kann das oszillierende Bewegen der Gefäßhalterung beginnen. Wenn weitere Gefäße in andere Gefäßaufnahmen eingesetzt oder aus diesen herausgenommen werden, kann die oszillierende Bewegung unterbrochen sein. Die Gefäßhalterung kann während einer gewünschten Inkubationszeit oszillierend bewegt werden, wobei die Inkubationszeit für ein jeweiliges Gefäß bestimmt sein kann, so dass nach Erreichen der Inkubationszeit dieses Gefäß aus der Gefäßhalterung entnommen werden kann und weitere Gefäße noch in der Gefäßhalterung verbleiben, bis ihre Inkubationszeit abgelaufen ist. Selbstverständlich ist die Anzahl von 12 Gefäßaufnahmen rein beispielhaft und es kann auch eine andere Anzahl von Gefäßaufnahmen bereitgestellt werden, beispielsweise 8, 10, 16 usw. Die Anzahl von Gefäßaufnahmen hängt insbesondere von den Dimensionen der Gefäße ab und ferner auch davon, wie die Gefäßhalterung selbst dimensioniert ist. Ferner kann anstelle wenigstens einer Gefäßaufnahme auch eine Art Platzhalter (Dummy) vorgesehen sein, in den kein Gefäß einführbar ist. Mit einem solchen Platzhalter kann die Gefäßhalterung während der Inkubationszeit für alle Gefäße beispielsweise so eingestellt werden, dass der Platzhalter zum Gefäßlademittel ausgerichtet ist.

Alternativ kann die Gefäßhalterung auch als im Wesentlichen vertikal ausgerichtete Platte ausgebildet sein, in welcher in mehreren Reihen und Spalten die Gefäßaufnahmen ausgebildet sind. Beispielsweise können drei Spalten mit jeweils vier Gefäßaufnahmen vorgesehen sein, so dass sich eine Art Gefäßaufnahmenmatrix bzw. -array ergibt. Die als vertikal angeordnete Platte ausgeführte Gefäßhalterung kann, beispielsweise mittels einer Tauchspule, in Horizontalrichtung in oszillierende Bewegung versetzt werden, so dass die Gefäßaufnahmen und die darin aufgenommenen Gefäße entsprechend mitbewegt werden können. Im Falle einer derartigen Anordnung von Gefäßaufnahmen in einer stehenden Gefäßhalterung ist es bevorzugt, wenn das Gefäßlademittel über einen eigenen Antrieb verfügt, mittels welchem das Gefäßlademittel an gewünschte Positionen der Gefäßaufnahmen bewegt werden kann. Insbesondere ist es wünschenswert, dass das Gefäßlademittel in vertikaler oder/und horizontaler Richtung beweglich ist relativ zur stehenden Gefäßhalterung. Denkbar ist auch, dass die Gefäßhalterung beispielsweise nur in horizontaler Richtung verstellbar und das Gefäßlademittel nur in vertikaler Richtung verstellbar ist.

Um die Verdunstung von Probenflüssigkeit während der Inkubationszeit einzuschränken, wird vorgeschlagen, dass die Vorrichtung Abdeckmittel umfasst, welche die Gefäße im eingesetzten Zustand in den Gefäßaufnahmen abdecken.

Die Abdeckmittel können aus Metall, insbesondere Aluminium, oder aus Kunststoff hergestellt sein. Sie sind vorzugsweise mit einem geringen Abstand zum oberen Gefäßrand angeordnet, was das Einführen und Herausnehmen von Gefäßen in die bzw. aus den Gefäßaufnahmen erleichtert. Die Abdeckmittel können auch als Wärmeleiter eingesetzt werden, um die Proben während der Inkubationszeit zu beheizen.

Die Abdeckmittel können alternativ als Dichtungsmittel ausgebildet sein, welche die Gefäße im eingesetzten Zustand in den Gefäßaufnahmen abdichten. Derartige Dichtungsmittel können elastische Membranen oder Deckel sein, welche sich abdichtend über den oberen Gefäßrand legen. Hierdurch wird die Verdunstung von Probenflüssigkeit weiter eingeschränkt. Im Falle eines Deckels wird ferner vorgeschlagen, dass der Deckel einen nach oben ausgesparten Bereich (Kavität) umfasst, welcher weg von der Wanne des Gefäßes ausgeformt ist. Durch eine derartige Ausgestaltung des Deckels wird der Abstand zwischen der Deckelinnenseite und der Probenflüssigkeit vergrößert, so dass ein Kontakt von Probenflüssigkeit mit dem Deckel während der oszillierenden Bewegung noch besser verhindert werden kann.

Die Gefäßlademittel umfassen vorzugsweise Gefäßgreifer, wobei die Dichtungsmittel und die Gefäßgreifer derart ausgebildet sind, dass durch ihre Wechselwirkung während des Vorgangs des Einsetzens der Gefäße bzw. des Entnehmens der Gefäße in die bzw. aus den Gefäßaufnahmen die Dichtungsmittel vom Gefäß entfernt gehalten werden. Dabei können insbesondere an den Gefäßgreifern bzw. an den Dichtungsmitteln, insbesondere am Deckel miteinander wechselwirkende Führungsflächen ausgebildet sein. Derartige Führungsflächen können für das Abheben des Dichtungsmittels bzw. des Deckels erforderliche Neigungen aufweisen, so dass beim Einführen der Gefäßgreifer in die Gefäßaufnahme das Dichtungsmittel bzw. der Deckel in gewisser Weise automatisch angehoben wird. Die Dichtungsmittel können ggf. in ihre Schließstellung, d.h. in Anlagestellung auf dem oberen Gefäßrand vorgespannt sein, beispielsweise durch elastische Ausgestaltung des Dichtungsmittels bzw. unter Verwendung einer Feder oder dgl.

Als Antrieb für die Gefäßhalterung wird ein Torque-Motor vorgeschlagen. Torque-Motoren zeichnen sich dadurch aus, dass sie einerseits ein großes Drehmoment erzeugen können und dass sie andererseits auch sehr präzise und sehr kleine Bewegungen durchführen können, was insbesondere vorteilhaft ist für die Erzeugung der oszillierenden Bewegungen. Ferner können mit dem Torque-Motor neben den oszillierenden Bewegungen auch Zustellbewegungen durchgeführt werden, um die Gefäßaufnahmen jeweils zum Gefäßlademittel zu bewegen, so dass ein Gefäß in die betreffende Gefäßaufnahme eingeführt werden kann und aus dieser herausgenommen werden kann. Es sind somit für das Laden bzw. Entladen der Gefäßhalterung und für ihre oszillierende Bewegung keine unterschiedlichen Antriebe erforderlich, sondern beide Bewegungen können durch ein und denselben Antrieb, nämlich den Torque-Motor durchgeführt werden. Die Vorrichtung und das durchzuführende Verfahren werden durch den vorgeschlagenen Aufbau insgesamt robuster und preisgünstiger. Alternativ kann auch ein geeignet ausgelegter Schrittmotor eingesetzt werden oder eine Tauchspule im Falle einer stehenden Gefäßhalterung.

Um das vorgeschlagene Verfahren steuerungstechnisch durchführen zu können, wird vorgeschlagen, dass die Vorrichtung eine Steuereinheit aufweist, die derart ausgestaltet ist, dass sie den Antrieb der Gefäßhalterung, insbesondere die oszillierende Bewegung oder/und Zustellbewegungen zum Gefäßlademittel steuern bzw. regeln kann.

Die Erfindung wird nachfolgend anhand einer Ausführungsform und unter Bezugnahme auf die anliegenden Figuren beispielhaft und nicht einschränkend beschrieben.
- Fig. 1: zeigt in Teilfigur a) eine schematische Perspektivansicht ei- ner Ausführungsform der erfindungsgemäßen Vorrichtung und in Teilfigur b) eine Vergrößerung des in Fig. 1a) einge- kreisten und mit I bezeichneten Bereichs.
- Fig. 2: zeigt eine seitliche Aufrissdarstellung der Vorrichtung der Fig. 1.
- Fig. 3: zeigt eine Draufsicht von oben auf die Vorrichtung.
- Fig. 4: zeigt eine Draufsicht auf einen die Gefäßaufnahmen aufwei- senden Rotor.
- Fig. 5: zeigt in einer schematischen Teildarstellung eine Gefäßauf- nahme und ein darin aufgenommenes Gefäß für Probenflüs- sigkeit.
- Fig. 6: zeigt eine schematische Vorderansicht eines Abdeckmittels für das Gefäß.
- Fig. 7: zeigt eine schematische, perspektivische Ansicht des Ab- deckmittels von unten, also auf die auf der Oberseite des Probengefäßes aufliegende Seite.
- Fig. 8: zeigt in den Teilfiguren a) und b) eine perspektivische Dar- stellung des Zusammenspiels zwischen Gefäßlademittel und einem die Gefäße abdichtenden Abdeckmittel, wobei in Fig. 8b) eine Vergrößerung des eingekreisten und mit VIII bezeichneten Bereiches der Fig. 8a) dargestellt ist.
- Fig. 9: zeigt in Teilfigur a) einen Rotor als Gefäßhalterung mit ei- nem alternativen Abdeckmittel und in Teilfigur b) eine Ver- größerung des gestrichelt umrandeten, mit IX bezeichneten Bereichs der Fig. 9a).
- Fig. 10: zeigt in schematischer Perspektivdarstellung eine alternative Ausführungsform der erfindungsgemäßen Vorrichtung.

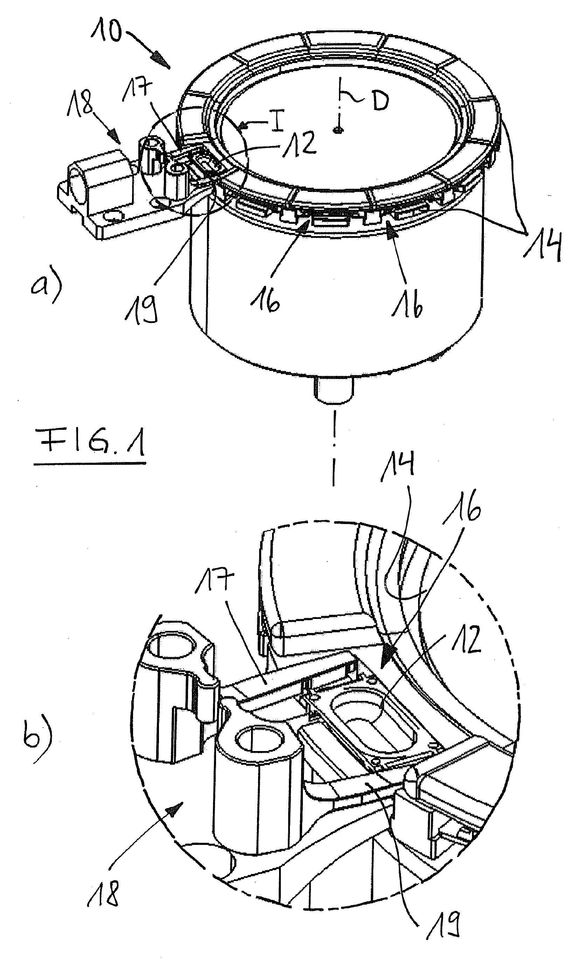

Fig. 1 zeigt eine perspektivische und schematische Darstellung einer Vorrichtung 10 zur Aufnahme von Gefäßen 12 für Probenflüssigkeit. Hierzu weist die Vorrichtung 10 einen scheibenartig ausgebildeten Rotor 14 als Gefäßhalterung auf, entlang dessen Umfang mehrere Gefäßaufnahmen 16 ausgebildet sind. Ein Gefäß 12 wird in eine entsprechende Gefäßaufnahme 16 mittels einer Greifvorrichtung 18 (Gefäßlademittel) eingesetzt bzw. aus dieser herausgenommen. Hierzu weist die Greifvorrichtung 18 zwei sich in Richtung des Rotors 14 erstreckende Greifarme 17, 19 auf (Fig. 1b), welche das Probengefäß 12 seitlich ergreifen und festklemmen können, so dass es in im Wesentlichen radialer Richtung bezogen auf den Rotor 14 aus diesem heraus bewegt oder zu diesem hin bewegt werden kann. Der Rotor 14 ist um eine Drehachse D drehbar, so dass alle Aufnahmen 16 zur Greifvorrichtung 18 bewegt werden können, um dort mit Probengefäßen 12 bestückt zu werden.

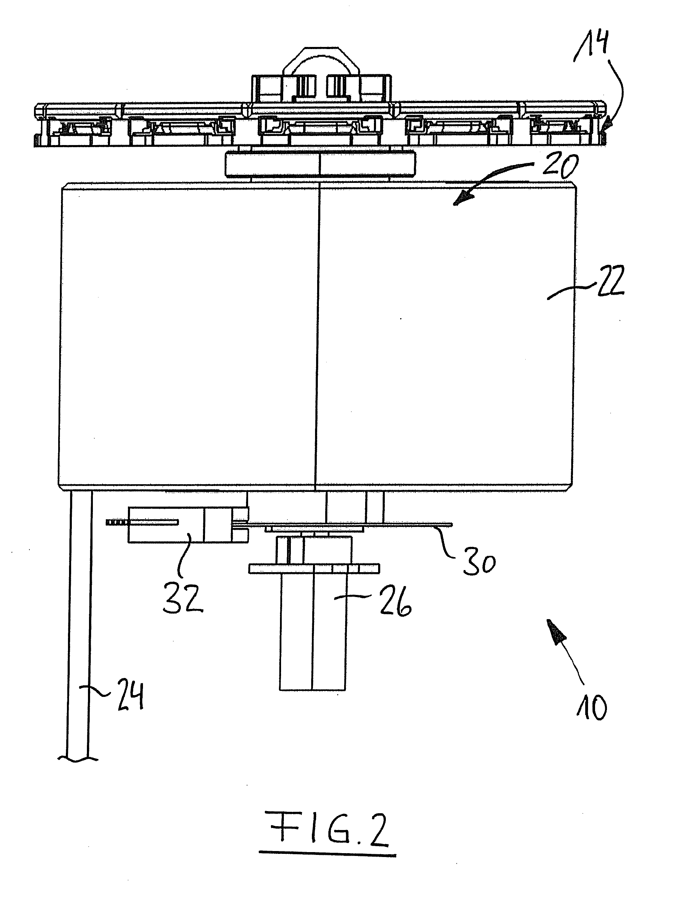

Fig. 2 zeigt die Vorrichtung 10 der Fig. 1 in einer seitlichen Aufrissdarstellung. Der Rotor 14 ist über eine nicht sichtbare Welle mit einem Elektromotor, hier in Form eines sog. Torque-Motors 20 verbunden, welcher in einem Gehäuse 22 untergebracht ist. Am Gehäuse 22 ist ferner ein Elektrokabel 24 angebracht, das den Torque-Motor 20 mit elektrischer Energie versorgt. Auf der Unterseite des Gehäuses 22 befindet sich ein Schleifringübertrager 26. Ferner ist ersichtlich, dass auf der Unterseite eine Abtastscheibe 30 (coding wheel) drehfest mit dem Torque-Motor 20 verbunden ist. Diese Abtastscheibe 30 wird durch einen Sensor 32 abgetastet, um die Drehbewegungen des Torque-Motors 20 erfassen zu können und diese Informationen an eine hier nicht dargestellte Steuereinrichtung zu übermitteln. Die angesprochene Steuereinrichtung dient dazu, die Bewegungen des Torque-Motors und somit des Rotors 14 zu steuern bzw. zu regeln.

Der Torque-Motor 20 ist ein sogenannter Direktantrieb, welcher ohne weitere mechanische Über- bzw. Untersetzung direkt mit dem Rotor 14 verbunden ist, so dass durch den Torque-Motor 20 erzeugte Drehbewegungen direkt auf den Rotor 14 übertragen werden können. Der Torque-Motor 20 kann so angesteuert werden, dass er eine oszillierende Bewegung durchführt, derart, dass die im Rotor 14 aufgenommenen Probengefäße mit einer Frequenz von etwa 1-50 Hertz, vorzugsweise etwa 10-20 Hertz, und einer Amplitude von weniger als 6 mm, vorzugsweise von etwa 0,2 - 4 mm, insbesondere 1 - 2 mm oszilliert werden. Diese hin und her gehende Bewegung ist in allen entsprechenden Figuren durch Pfeile OSZ angedeutet. Bei dieser (Dreh-) Bewegung werden die Gefäße 12 im Wesentlichen parallel zu ihrem in der Regel ebenen Boden bewegt. Durch den Torque-Motor 20 kann aber nicht nur die oszillierende Bewegung erzeugt werden, sondern er dient auch dazu, dass die Gefäßaufnahmen 16 zur Greifervorrichtung 18 bewegt bzw. positioniert werden können, um Probengefäße in die Aufnahme 16 einzusetzen oder aus diesen herauszunehmen. Somit können durch einen einzigen Antrieb alle relevanten Bewegungsmuster des Rotors 14 mittels entsprechender Ansteuerung durch die nicht gezeigte Steuereinheit durchgeführt werden.

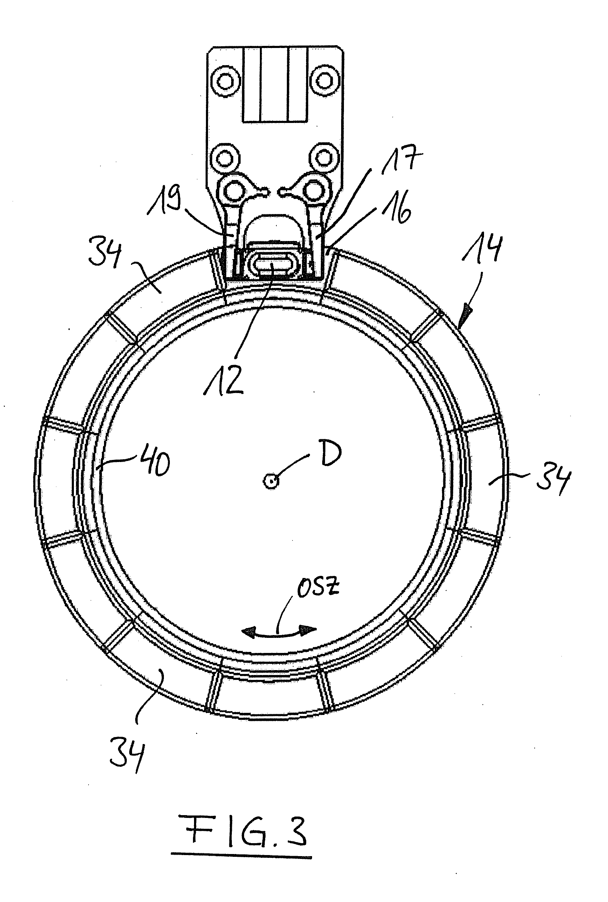

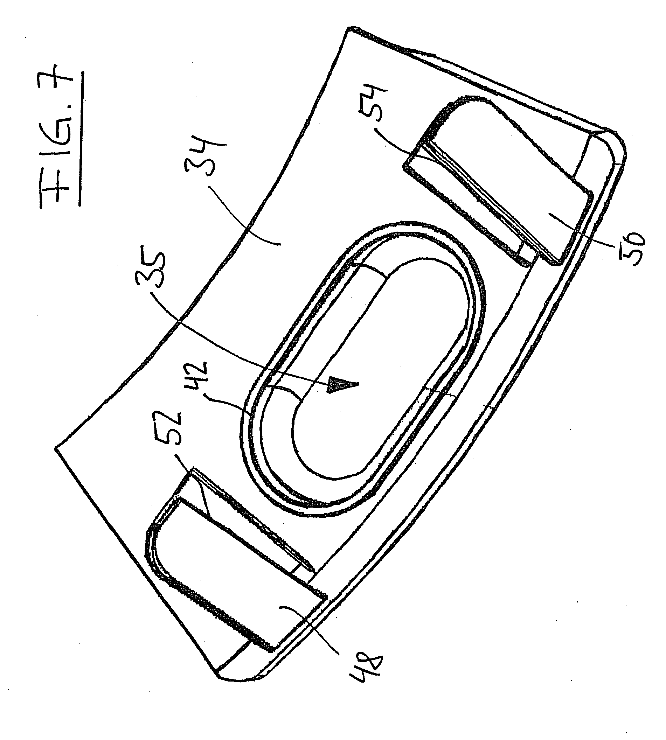

Aus der Draufsicht der Fig. 3 ist ersichtlich, dass der Rotor 14, in dessen Aufnahmen 16 die Gefäße 12 bzw. die Träger oder Biochips aufgenommen sind, über zwölf Gefäßaufnahmen 16 verfügt. Diese hier dargestellte Anzahl von zwölf Gefäßaufnahmen 16 ist rein beispielhaft und es können durchaus weniger oder mehr Gefäßaufnahmen vorgesehen werden, je nach Größe des Rotors und je nach Größe der Probengefäße 12. An seiner Oberseite weist der Rotor 14 Abdeckmittel 34 auf, welche jeweils eine Aufnahme 16 und ein darin aufgenommenes Probengefäß 12 insbesondere dichtend abdecken. Dabei weisen diese deckelartigen Abdeckmittel 34 einen dem wannenartig ausgebildeten Probengefäß 12 gegenüberliegenden Hohlraum (Feuchtraumkavität 35 (Fig. 7)) auf, so dass oberhalb des oberen Randes des Probengefäßes 12 ausreichend Platz vorhanden ist, um ein Benetzen des Abdeckmittels mit Probenflüssigkeit weitestgehend auszuschließen. Ferner dient die Abdeckung 34 dazu, der Verdunstung von Probenflüssigkeit entgegenzuwirken.

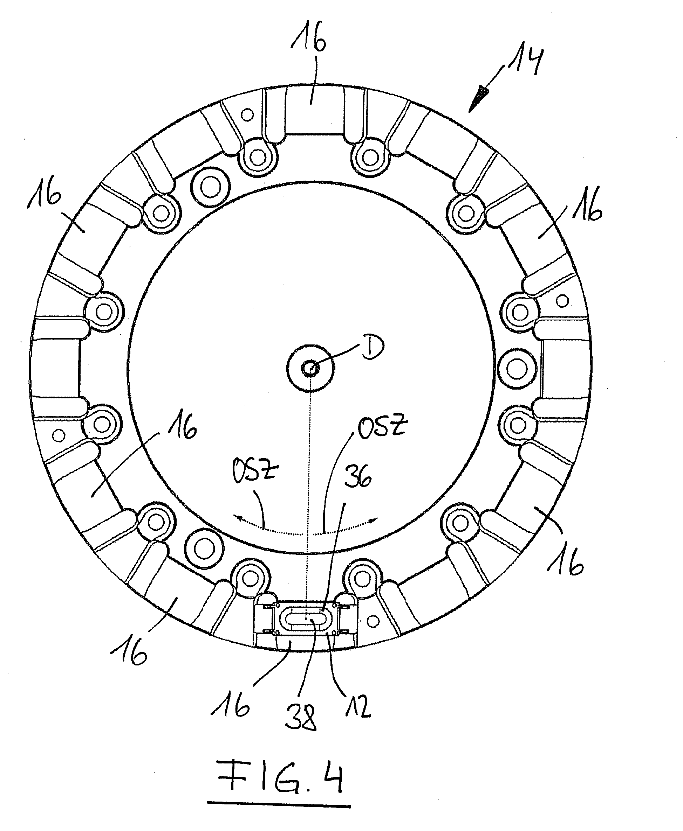

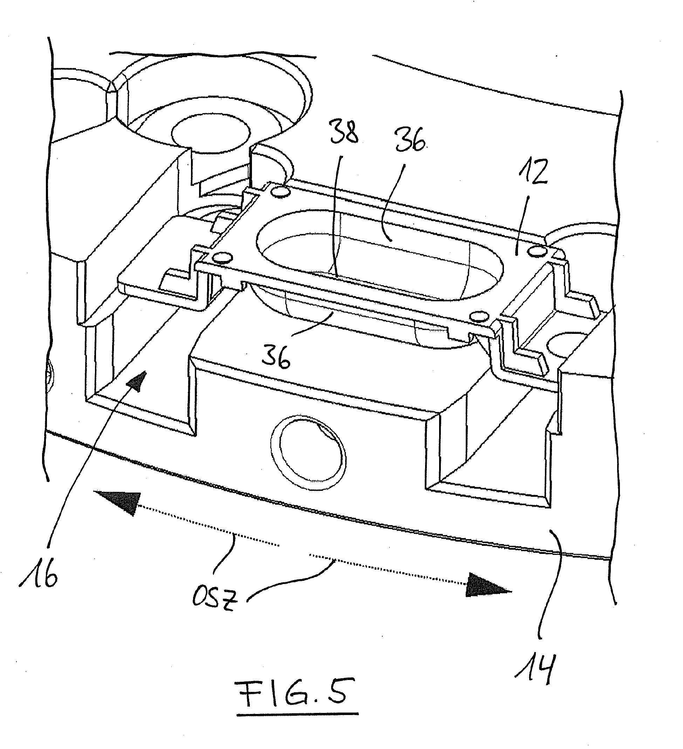

Fig. 4 zeigt eine schematische Draufsicht auf den Rotor 14 mit seinen zwölf Gefäßaufnahmen 16 ohne Abdeckmittel. Beispielhaft ist in eine Gefäßaufnahme ein Probengefäß 12 eingesetzt. Dieses Probengefäß 12 ist in Fig. 5 in vergrößerter perspektivischer Darstellung ersichtlich. Das Probengefäß 12 weist eine wannenartige Vertiefung 36 auf mit einem im Wesentlichen ebenen Boden 38. Auf diesem Boden sind immobilisierte Reaktanden (nicht dargestellt) in Form einer Matrix bzw. eines Arrays angeordnet, welche mit dem in der Probenflüssigkeit enthaltenen Analyten wechselwirken. Diese Wechselwirkung wird durch die angesprochene oszillierende Bewegung OSZ der Probengefäße und der darin enthaltenen Probenflüssigkeit positiv beeinflusst, insbesondere wird durch die oszillierende Bewegung die Konzentration von Analyten im Grenzbereich zu den Reaktanden verbessert, so dass ausreichend Analyten mit den Reaktanden wechselwirken können und hierdurch die zum Nachweis des Analyten erforderliche Inkubationszeit verkürzt werden kann.

Die in Bezug auf die Fig. 3 bereits angesprochenen Abdeckmittel 34 können als einzelne am Rotor 14 befestigte Deckel ausgebildet sein oder sie können über einen durchgehenden, alle Deckel verbindenden Ring 40 miteinander verbunden sein (Fig. 3).

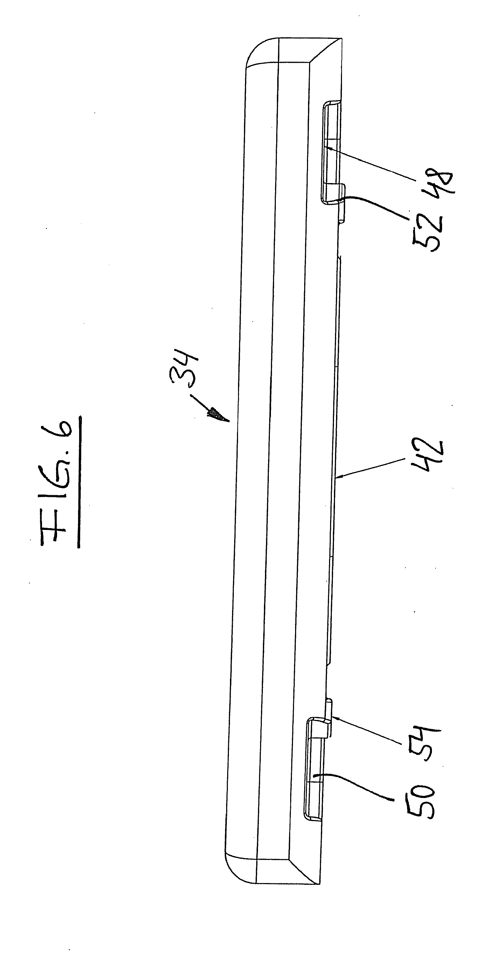

Die Fig. 6 und 7 zeigen in den Teilfiguren einen derartigen abdichtenden Deckel 34 in einer perspektivischen Ansicht von unten (Fig. 7) sowie in einer Aufrissdarstellung von vorne (Fig. 6). Aus der Darstellung der Fig. 7 ist eine Feuchtraumkavität 35 im Deckel 34 ersichtlich, welche über der Wanne 36 des Probengefäßes 12 angeordnet ist, um ausreichend Platz zu haben zwischen der Probenflüssigkeit und dem Deckel 34, so dass ein Kontakt von Probenflüssigkeit am Deckel 34 verhindert werden kann. Aus diesen Darstellungen sind auch Freiraumflächen 48, 50 ersichtlich, in welche die Greifer 17, 19 eingeführt werden können und die derart bemessen sind, dass die Greifer 17, 19 eine Greifbewegung zum Probengefäß 12 hin bzw. von diesem weg durchführen können. Ferner sind auch die Führungsflächen 52, 54 ersichtlich, welche im Zusammenwirken mit den Greifern 17, 19 das Anheben des Deckels 34 ermöglichen. Um die Feuchtraumkavität 35 herum ist eine Dichtlippe 42 angeordnet, welche die Trägerwanne 36 bei geschlossenem Deckel 34 flüssigkeitsdicht verschließt.

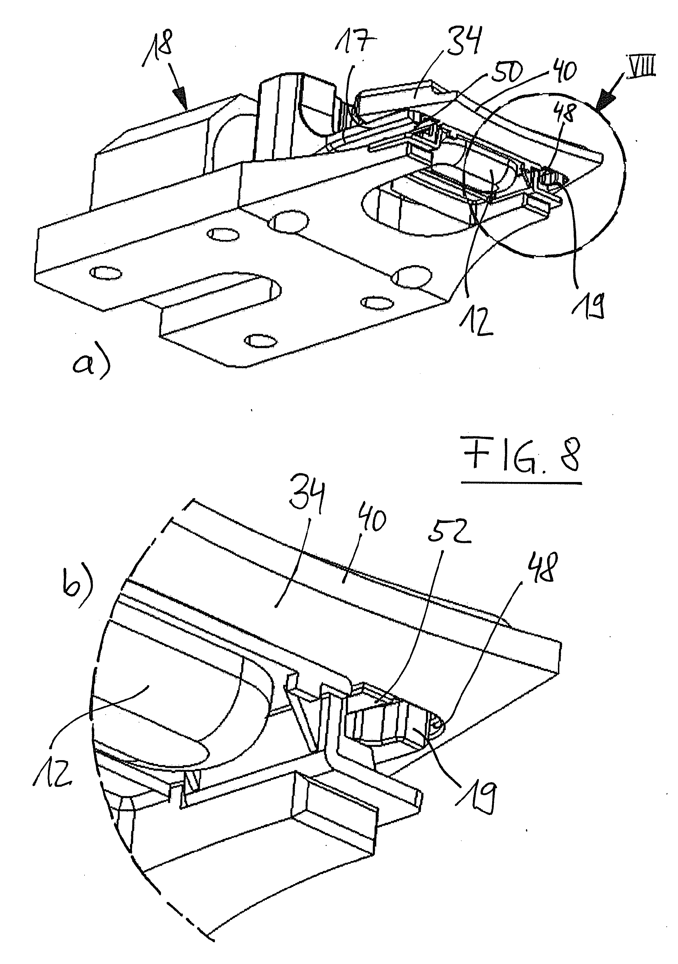

Derartige abdichtende Deckel 34 können, wie dies aus den Fig. 8a) und 8b) ersichtlich ist, mittels der Greifer 17, 19 (Fig. 3) angehoben werden, so dass der Deckel 34 relativ zum Probengefäß 12 verschwenkt wird, um das Probengefäß mittels der Greifer 17, 19 aus der Gefäßaufnahme 16 zu entnehmen oder in diese einzuführen. Hierzu weisen die Greifer 17, 19 bzw. die Deckel 34 an ihrer Unterseite entsprechende Führungsflächen 52, 54 auf, die das Anheben bzw. Absenken des Deckels 34 in Abhängigkeit von der Stellung der Greifer 17, 19 bewirken. Die Deckel 34 sind durch Schwerkraft und den elastischen Ring 40 in die geschlossene, auf dem Probegefäß 12 aufliegende Stellung vorgespannt.

Die abdichtenden Deckel 34 sind einzeln oder, sofern sie mittels des Rings 40 miteinander verbunden sind, als gesamter Deckelring austauschbar und können bei Bedarf ausgewechselt werden. Im Hinblick auf derartige Auswechslungen der Deckel 34 ist ein zusammenhängender Deckelring besonders vorteilhaft, weil der Zeitaufwand zum Auswechseln gering gehalten werden kann.

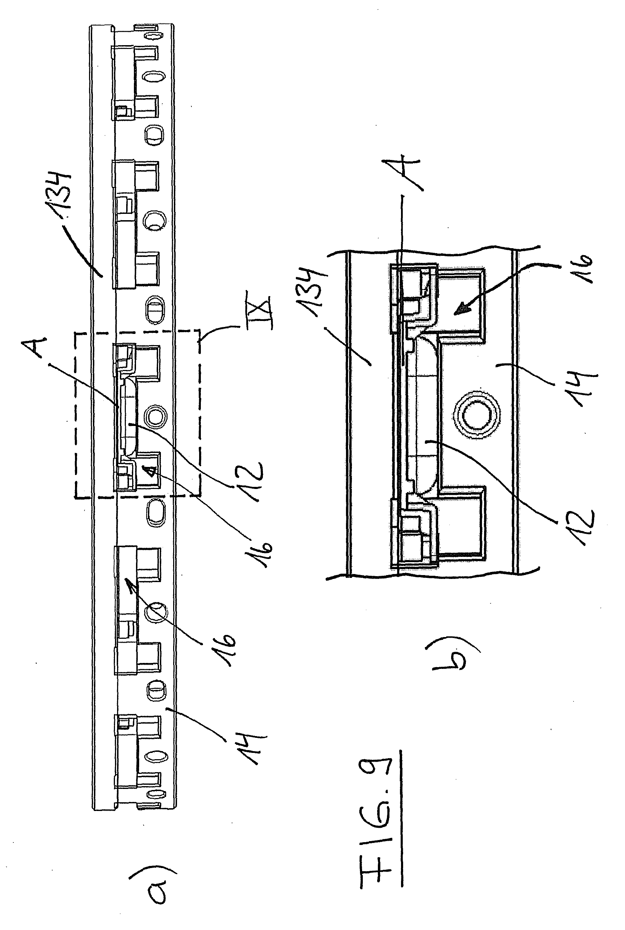

Alternativ zu einer abdichtenden Abdeckung mittels der als Dichtungsmittel ausgebildeten Deckel 34 ist es auch möglich, einen Metallring 134, insbesondere aus Aluminium, oberhalb der Probengefäße 12 anzuordnen, wie dies aus der Fig. 9 ersichtlich ist. Eine derartige Abdeckung aus Metall kann ebenfalls als Ring ausgebildet sein oder aber auch als einzelne Abdeckelemente pro Gefäßaufnahme 16. Derartige Abdeckungen sind nicht abdichtend in Kontakt mit dem oberen Rand des Probengefäßes 12, sondern es ist zwischen der Unterseite des Abdeckelements und dem oberen Rand des Probengefäßes 12 ein kleiner, möglichst minimaler Abstand A vorhanden, welcher das Einsetzen und Herausnehmen von Probengefäßen 12 unter dem feststehenden Abdeckelement ermöglicht. Es hat sich gezeigt, dass durch diese einfache Konstruktion einer Abdeckung 134 ohne Abdichtung des Probegefäßes 12 die Verdunstung von Probenflüssigkeit ausreichend eingeschränkt werden kann. Ferner kann eine derartige Abdeckung 134 aus Metall auch als Wärmeleiter genutzt werden, um ein Kondensieren von Probenflüssigkeit an der Abdeckung 134 zu verhindern und/oder um die Probenflüssigkeit ggf. während der gewünschten Inkubationszeit auf eine bestimmte Temperatur erwärmen zu können. Falls die Abdeckung 134 aus einem nicht oder schlecht wärmeleitenden Material hergestellt ist, kann zusätzlich eine Heizvorrichtung, insbesondere Infrarot-Heizung oder dergleichen eingesetzt werden, um die Abdeckung zu erwärmen.

Auch die Abdeckung 134 aus Metall, sofern sie insgesamt ringförmig ausgebildet ist, kann zwecks Reinigung oder Austausch in einfacher Weise vom Rotor 14 abgenommen und wieder aufgesetzt werden.

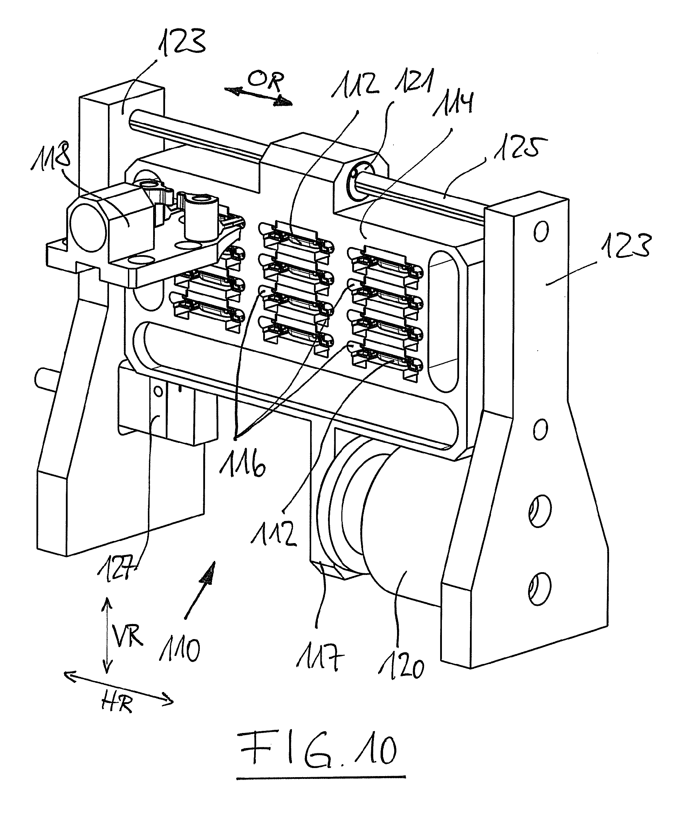

Fig. 10 zeigt eine alternative Ausführungsform einer Vorrichtung zur Durchführung des erfindungsgemäßen Verfahrens. Bei dieser Vorrichtung 110 sind Gefäßaufnahmen 116 vertikal übereinander und horizontal nebeneinander in der Art einer Matrix bzw. eines Arrays angeordnet. Die Gefäßhalterung 114 ist plattenartig bzw. als Block ausgebildet und in ihr sind als Öffnungen die Gefäßaufnahmen 116 ausgebildet. Um die Gefäßhalterung 114 und die in den Gefäßaufnahmen 116 aufgenommenen Gefäße 112 oszillierend bewegen zu können, ist die Gefäßhalterung 114 an einem Flansch 117 mit einer Tauchspule 120 als Antrieb für die oszillierende Bewegung verbunden. Ferner weist die Gefäßhalterung 114 ein Lager 121 auf, das entlang einer Schiene 125 in Oszillationsrichtung beweglich ist. Die Schiene 125 ist an weiteren Rahmenbauteilen 123 befestigt. Zum Be- und Entladen der Gefäßaufnahmen 116 dient ein Gefäßlademittel 118, das sowohl in horizontaler Richtung HR als auch in vertikaler Richtung VR bezogen auf die Gefäßhalterung 114 beweglich ist, so dass das Gefäßlademittel 118 zu jeder Gefäßaufnahme 116 bewegt werden kann. Alternativ ist es auch denkbar, dass die Gefäßhalterung 114 in einer Richtung, also Vertikalrichtung oder Horizontalrichtung beweglich ist und das Gefäßlademittel 118 in der anderen Richtung beweglich ist, so dass durch gleichzeitige Relativbewegungen des Gefäßlademittels 118 und der Gefäßhalterung 114 die einzelnen Gefäßaufnahmen 116 angesteuert werden können. Wie schon bei der ersten Ausführungsform sind auch die Gefäße 112 vorzugsweise durch einen Deckel 134 abgedeckt. Weiter kann beispielsweise auf der Rückseite der Gefäßhalterung 114 eine Heizfolie angebracht sein (nicht dargestellt). Der Vollständigkeit halber wird noch darauf hingewiesen, dass bei 127 ein Linearsensor angedeutet ist, durch den die oszillierende Bewegung der Gefäßhalterung 114 erfasst und mittels einer nicht dargestellten Steuereinheit die Tauchspule 120 entsprechend angesteuert werden kann.

## Patentansprüche

1. Verfahren zum Nachweis von Analyten in einer Probenflüssigkeit, bei dem die Probenflüssigkeit einer Mischbehandlung auf einer insbesondere immobilisierte Reaktanden aufweisenden Fläche (38) eines Trägers unterzogen wird, wobei als Gefäß (12) für die Probenflüssigkeit ein insbesondere wannenartiges Gefäß (12) mit im Wesentlichen ebenem Boden (38) als Trägerfläche für die immobilisierten Reaktanden verwendet wird,
**dadurch gekennzeichnet, dass** die Probenflüssigkeit bei der Mischbehandlung relativ zu den immobilisierten Reaktanden durch oszillierendes Bewegen des Gefäßes (12) bewegt wird.

2. Verfahren nach Anspruch 1, **dadurch gekennzeichnet, dass** das Gefäß (12) mit einer Frequenz von etwa 1 bis 50 Hertz, vorzugsweise etwa 10 bis 20 Hertz, und einer Amplitude von weniger als 6 Millimeter, vorzugsweise von etwa 0,2 bis 4 Millimeter, höchst vorzugsweise von etwa 1 bis 2 Millimeter, oszilliert wird.

3. Verfahren nach Anspruch 1 oder 2, **dadurch gekennzeichnet, dass** die oszillierende Bewegung des Gefäßes (12) im Wesentlichen parallel zum ebenen Boden (38) des Gefäßes (12) erfolgt.

4. Verfahren nach einem der vorhergehenden Ansprüche, **dadurch gekennzeichnet, dass** das Gefäß (12) in einer Gefäßhalterung (14) oder mehrere Gefäße (12) gleichzeitig in einer gemeinsamen Gefäßhalterung (14) oszilliert werden.

5. Verfahren nach Anspruch 4, **dadurch gekennzeichnet, dass** jedes Gefäß (12) durch einen dem jeweiligen Gefäß zugeordneten Antrieb oszilliert wird oder dass mehrere, insbesondere alle Gefäße (12) in der Gefäßhalterung (14) durch einen gemeinsamen Antrieb (20) oszilliert werden.

6. Verfahren nach einem der Ansprüche 1 bis 5, **dadurch gekennzeichnet, dass** das Gefäß (12) vor dem Oszillieren abgedeckt wird, insbesondere durch ein Deckelelement (34) abgedichtet wird.

7. Vorrichtung zur Durchführung des Verfahrens nach einem der vorhergehenden Ansprüche, wobei sie wenigstens eine Gefäßhalterung (14) zur Aufnahme von wenigstens einem Gefäß (12) für Probenflüssigkeit umfasst, **dadurch gekennzeichnet, dass** sie wenigstens einen Antrieb (20) aufweist, welcher derart ausgestaltet ist, dass die Gefäßhalterung (14) und das darin enthaltene Gefäß (12) in oszillierende Bewegung versetzt werden kann.

8. Vorrichtung nach Anspruch 7, **dadurch gekennzeichnet, dass** sie eine einzige Gefäßhalterung (14) mit mehreren Gefäßaufnahmen (16) umfasst und einen einzigen Antrieb (20), durch den alle in den Gefäßaufnahmen (16) aufgenommenen Gefäße (12) gleichzeitig oszilliert werden können.

9. Vorrichtung nach Anspruch 7 oder 8, **dadurch gekennzeichnet, dass** sie ferner ein Gefäßlademittel (18) umfasst, wobei das Gefäßlademittel (18) und die Gefäßhalterung (14) relativ zueinander beweglich sind, um ein Gefäß (12) in eine bestimmte Gefäßaufnahme (16) einsetzen zu können.

10. Vorrichtung nach Anspruch 8 oder 9, **dadurch gekennzeichnet, dass** der Antrieb (20) der Gefäßhalterung derart ausgestaltet ist, dass er neben der Funktion der Erzeugung der oszillierenden Bewegung wenigstens eine weitere Funktion des Bewegens der Gefäßhalterung (14) relativ zum feststehenden Gefäßlademittel (18) umfasst, derart, dass eine jeweilige Gefäßaufnahme (16) in einer vorbestimmten Relativstellung zum Gefäßlademittel (18) positionierbar ist, um ein Gefäß (12) in die betreffende Gefäßaufnahme (16) einzusetzen oder aus dieser herauszunehmen.

11. Vorrichtung nach einem der Ansprüche 8 bis 10, **dadurch gekennzeichnet, dass** die Gefäßhalterung (14) kreisförmig ausgebildet ist und entlang ihrem Umfangsrand die Gefäßaufnahmen (16) aufweist, insbesondere verteilt in regelmäßigen Abständen.

12. Vorrichtung nach Anspruch 11, **dadurch gekennzeichnet, dass** sie ferner Abdeckmittel (34, 134) umfasst, welche die Gefäße (12) im eingesetzten Zustand in den Gefäßaufnahmen (16) abdecken.

13. Vorrichtung nach Anspruch 12, **dadurch gekennzeichnet, dass** die Abdeckmittel (34) als Dichtungsmittel (34, 42) ausgebildet sind und die Gefäße (12) im eingesetzten Zustand dicht verschließen.

14. Vorrichtung nach Anspruch 13, **dadurch gekennzeichnet, dass** die Gefäßlademittel (18) Gefäßgreifer (17, 19) umfassen, wobei die Dichtungsmittel (34, 42) und die Gefäßgreifer (17, 19) derart ausgebildet sind, dass durch ihr Wechselwirken während des Vorgangs des Einsetzens der Gefäße (12) bzw. des Entnehmens der Gefäße (12) in die bzw. aus den Gefäßaufnahmen (16) die Dichtungsmittel (34, 42) vom Gefäß (12) entfernt gehalten werden.

15. Vorrichtung nach einem der Ansprüche 7 bis 14, **dadurch gekennzeichnet, dass** der Antrieb für die oszillierende Bewegung ein Torque-Motor (20) oder ein Schrittmotor oder eine Tauchspule ist, der bzw. die mit der Gefäßhalterung (14) in Verbindung steht.

16. Vorrichtung nach einem der Ansprüche 7 bis 15, **dadurch gekennzeichnet, dass** sie ferner eine Steuereinheit aufweist, die derart ausgestaltet ist, dass sie den Antrieb (20) der Gefäßhalterung (14), insbesondere deren oszillierende Bewegung und vorzugsweise Zustellbewegungen zum Gefäßlademittel (18) oder Zustellbewegungen des Gefäßlademittels, steuern bzw. regeln kann.
